# EUROPEAN PATENT SPECIFICATION

(11) **EP 2 329 997 B1**
(45) Date of publication and mention of the grant of the patent: **12.08.2015**
(21) Application number: 09178078.3
(22) Date of filing: 04.12.2009
(51) Int. Cl.: B60R 21/34

(54) **A safety device**
Sicherheitsvorrichtung
Dispositif de sécurité

(43) Date of publication of application: 08.06.2011
(73) Proprietor: Autoliv Development AB, 447 83 Vårgårda (SE)
(72) Inventor: Kuntzsch, Stefan, 52496, Ljung (SE)
(74) Representative: Beattie, Alex Thomas Stewart

(56) References cited:
- DE-A1- 10 116 716
- JP-A- 2003 182 511

## Description

THE PRESENT INVENTION relates to a safety device, and more particularly relates to a safety device to lift the hood or bonnet of a vehicle in the event that the vehicle is involved in a crash situation.

Devices have been proposed previously to lift the rear part of the hood of a vehicle if the vehicle crashes into a pedestrian. The hood is lifted to move the hood away from the engine block so that the hood can deform plastically over a distance if the pedestrian is thrown onto the hood. The plastic deformation of the hood absorbs energy and provides a cushioning effect to minimise injury to the pedestrian.

A prior proposed hood lifting arrangement incorporates a hinge device which allows the hood to be opened normally to allow access to the engine. The device also allows the rear part of the hood to be lifted by a drive means in a crash situation. The drive means is mounted to part of the vehicle beneath the hood. Upon activation, the drive means exerts an upward force on the underside of the hood which causes a pin in the hinge device to shear to allow the rear part of the hood to be lifted to a raised position.

The prior proposed arrangement requires special mountings to be provided on the vehicle to mount the drive means and the hinge device to the vehicle. The arrangement is therefore limited for use only with vehicles which have been provided with these special mountings.

The shear pin in the prior proposed arrangement must be replaced after the arrangement has been activated in order to reset the arrangement to its normal condition. Sourcing and fitting a replacement shear pin adds to the cost of repairing the vehicle.

Examples of prior art hood-lifting safety devices are disclosed in JP-A-2003182511 which discloses the preamble of claim 1 and DE-A-10116716.

The present invention seeks to provide an improved hood-lifting safety device for use in a vehicle.

According to one aspect of the present invention, there is provided a hood-lifting safety device for use in a vehicle, the device comprising a first elongate support member which is mounted, in use, to part of a vehicle, a second elongate support member which incorporates a mounting edge which is mounted, in use, to the hood of a vehicle, the first and second support members being attached to each other pivotally, and a movement element which is configured to be driven in a drive direction, wherein the second support member is provided with a primary elongate guide edge which extends at least partly along the second support member, the primary guide edge being inclined at an angle relative to the drive direction with the primary guide edge sloping away from the mounting edge in the drive direction, wherein the first support member incorporates a reference edge which is adjacent to and substantially parallel with the mounting edge of the second support member when the second support member is an initial position, and wherein the first support member is provided with a secondary elongate guide edge which is inclined an angle relative to the drive direction with the secondary guide edge sloping towards the reference edge in the drive direction, the movement engaging the primary guide edge and the secondary guide edge and exerting a force slidably along at least part of the length of the primary guide edge and the secondary guide edge when the movement element is driven in the drive direction to pivot the second support member relative to the first support member from the initial position to an activated position.

Preferably, the device further comprises a drive means which is mounted to the first support member.

Conveniently, the first and second support members are attached to each another pivotally at or near one end and the drive means is mounted pivotally at or near the other end of the first support member by a pivot member.

Advantageously, the device incorporates a mounting bracket which is attached, in use, to part of a vehicle, the mounting bracket being attached pivotally to the first support member by the pivot member.

In one embodiment, the primary guide edge has a groove at one end which receives and retains the movement element when the second support member is in the activated position.

In another embodiment, the drive means incorporates a resilient element which biases the drive means to move the movement element in a direction which is opposite to the drive direction when the movement element is retained in the groove.

In a further embodiment, the primary guide edge is substantially straight. In a yet further embodiment, the primary guide edge is curved.

Preferably, the primary guide edge is an edge of an elongate slot which is provided in the second support member.

In one embodiment, the secondary guide edge is substantially straight. In another embodiment, the secondary guide edge is curved.

In a further embodiment, the secondary guide edge is an edge of an elongate guide slot which is provided in the first support member.

In a yet further embodiment, the width of the guide slot in the first support member tapers inwardly along the length of the guide slot.

In a still further embodiment, the movement element is provided with at least one bushing which is rotatably mounted to the movement element.

In order that the invention may be more readily understood, and so that further features thereof may be appreciated, embodiments of the invention will now be described, by way of example, with reference to the accompanying drawings in which:
Figure 1 is a diagrammatic side view of a safety device in accordance with a preferred embodiment of the invention with the device in a normal, unactivated, condition,
Figure 2 is a diagrammatic top view of the preferred embodiment of the invention,
Figure 3 is a diagrammatic side view of a first support member of the preferred embodiment of the invention,
Figure 4 is a diagrammatic side view of a second support member of the preferred embodiment of the invention,
Figure 5 is a view corresponding to figure 1, with the front of the hood lifted to an open position,
Figure 6 is a view corresponding to figure 1, with the device in an activated condition, lifting the rear part of the hood,
Figure 7 is a diagrammatic top view of part of a further embodiment of the invention which incorporates bushings,
Figure 8 is a diagrammatic view of guide slots of a yet further embodiment of the invention,
Figure 9 is a diagrammatic view of guide slots of a still further embodiment of the invention,
Figure 10 is a diagrammatic side view of guide slots of another embodiment of the invention, and
Figure 11 is a diagrammatic view of a modified drive means from another embodiment of the invention.

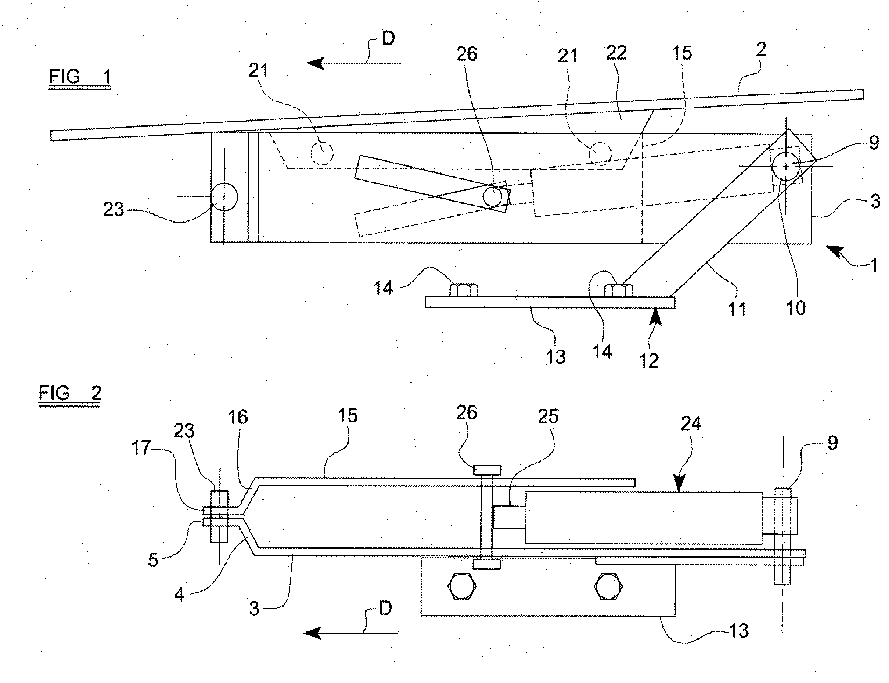

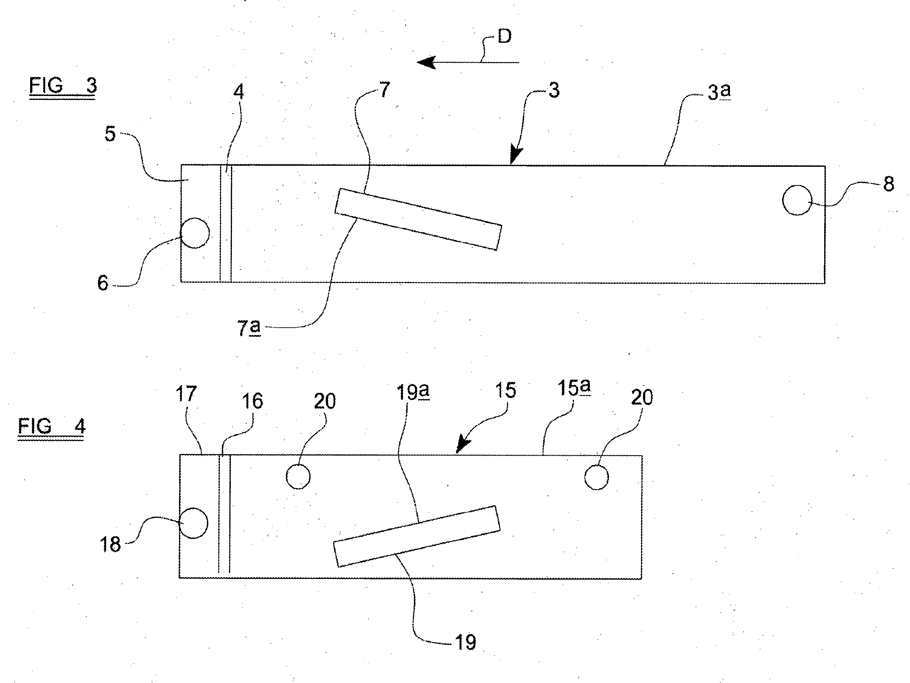

Referring initially to figures 1 and 2 of the accompanying drawings, a safety device 1 is shown mounted in position beneath the rear part of a hood 2 of a vehicle (not shown). The safety device 1 incorporates a first support member 3 which is shown on its own in figure 3. The first support member 3 is a generally planar elongate rectangular element. The upper edge of the first support member 3 defines a reference edge 3a.

The first support member 3 incorporates an angled section 4 at one end which is defined by a section of the first support member 3 which is bent at an angle which is transverse to the plane of the first support member 3. A planar attachment flange 5 extends from the end of the transverse section 4 in a plane which is parallel to the plane of the first support member 3. The attachment flange 5 incorporates a mounting aperture 6.

The first support member 3 incorporates an elongate guide slot 7 which is formed in the planar region of the first support member 3. The guide slot 7 is shown to be a generally rectangular slot, but it is to be appreciated that the ends of the guide slot 7 may be rounded. In this preferred embodiment, the guide slot 7 is straight but, as will be discussed below, in other embodiments the guide slot 7 may be curved.

The guide slot 7 extends along the first support member 3 at an inclined angle to the longitudinal axis of the first support member 3. As the guide slot 7 extends along the length of the first support member 3 from the rear part of the hood 2 towards the front part of the hood 2, the guide slot 7 slopes upwardly towards the plane of the hood 2 and towards the reference edge 3a.

The lower edge of the guide slot 7 in the first support member 3 defines a secondary guide edge 7a. The purpose of the secondary guide edge 7a will become clear from the description below.

A mounting aperture 8 is provided through the end of the first support member 3 which is remote from the end which incorporates the attachment flange 5. A generally cylindrical pivot member 9 extends through the mounting aperture 8 and through a further mounting aperture 10 which is provided through the end of a mounting arm 11 of a mounting bracket 12. A planar base 13 extends from the other end of the arm 11. The planar base 13 is provided with apertures which receive bolts 14 to attach the bracket 12 to part of a vehicle.

The lifting device 1 incorporates a second support member 15 which is shown on its own in figure 4. The second support member 15 is of the same general shape, but is shorter in length than the first support member 3. The second support member 15 incorporates an angled section 16 and an attachment flange 17. The attachment flange 17 is provided with an attachment aperture 18.

An elongate guide slot 19 is formed in the planar section of the second support member 15. The guide slot 19 is shown to be a generally rectangular slot, but it is to be appreciated that the ends of the guide slot 19 may be rounded. In this preferred embodiment, the guide slot 19 is straight but, as will be discussed below, in other embodiments the guide slot 19 may be curved. The guide slot 19 in the second support member 15 preferably has the same travel length as the guide slot 7 in the first support member 3.

The upper edge of the guide slot 19 in the second support member 15 defines a primary guide edge 19a. The purpose of the primary guide edge 19a will become clear from the description below.

The second support member 15 incorporates two spaced apart mounting apertures 20 which are formed through an upper part of the planar section of the second support member 15. The mounting apertures 20 receive bolts 21 to allow the second support member 15 to be mounted to a mounting flange 21 which is provided on the underside of a rear part of the hood 2. The upper edge of the second support member 15 which is mounted closest to the hood 2 defines a mounting edge 15a. The mounting edge 15a is positioned at the top of the device 1 when the device 1 is installed in a vehicle.

The guide slot 19 extends along the second support member 15 at an inclined angle to the longitudinal axis of the second support member 15. The angle of the guide slot 19 is inclined in an opposite direction to the angle of inclination of the guide slot 7 in the first support member 3, when the support members 3,15 are aligned with one another, as shown in figure 1. The guide slot 19 is angled so that as the guide slot 19 extends along the length of the second support member 15 in the direction from the rear part of the hood 2 towards the front part of the hood 2, the guide slot 19 slopes downwardly, away from the plane of the hood 2 and away from the mounting edge 15a.

A pivot shaft 23 extends through the aperture 6 in the first support member 3 and the attachment aperture 18 in the second support member 15 to attach the support members 3,15 to one another pivotally at one end. The planar sections of the support members 3,15 are adjacent one another with a space between them due to the angled sections 4,16, as shown in figure 2.

When the device 1 is in the unactivated condition, the reference edge 3a of the first support member 3 is adjacent to and substantially parallel with the mounting edge 15a of the second support member 15.

The device 1 incorporates a drive means 24 which, in this preferred embodiment, is a piston and cylinder arrangement. The piston and cylinder arrangement is configured to be driven by a source of compressed gas. In some embodiments of the invention, the drive means 24 incorporates the source of compressed gas. In further embodiments the drive means 24 is an electrically driven device such as an electric motor.

One end of the drive means 24 is mounted pivotally to the first support member 3 by the pivot element 9. A piston 25 protrudes outwardly from the other end of the drive means 24. The drive means 24 is configured to drive the piston 25 outwardly from the cylinder along a substantially straight drive axis in a drive direction towards the front of the vehicle, as indicated generally by arrow D in figure 1. The primary guide edge 19a and the secondary guide edge 7a are inclined at an angle to the drive direction D.

The drive means 24 is configured to be activated by a control arrangement (not shown) in the event that the control arrangement senses that the vehicle has been involved in a crash situation. The control arrangement could, for instance, incorporate an acceleration sensor which is positioned near the front of the vehicle to detect if the vehicle crashes into a pedestrian. In other embodiments, the control arrangement incorporates a sensor, such as a radar or camera, which is configured to sense when a crash situation is about to occur.

The control arrangement processes signals from the sensor and transmits an activation signal to the drive means 24 to activate the drive means 24 in the event of a crash situation, or in the event of an anticipated crash situation.

A movement element 26 is attached pivotally to the end of the piston 25. The movement element 26, in this preferred embodiment, is an elongate bar with enlarged ends which extends across the width of the device 1. The ends of the movement element 26 extend through the guide slots 7,19 in the support members 3,15. The main shaft of the movement element 26 is slightly narrower than the width of the guide slots 7,19 so that the movement element 26 can slide along the slots 7,19.

When the drive means 24 is in an initial, unactivated condition the piston 25 is retracted and the movement element 26 is positioned at the rightmost end of both of the guide slots 7,19, as shown in figure 1. The movement element 26 engages the primary and secondary guide edges 7a,19a of the guide slots 7,19, thereby blocking the first and second support members 3,15 from pivoting relative to one another about the pivot shaft 23. The movement element 26 therefore locks the support members 3,15 relative to one another in the initial position, as shown in figure 1.

The guide slots 7,19 define elongate windows in the support members 3,15 which are aligned at one end when the device is in the normal, unactivated, condition. The movement element 26 is received within the aligned ends of the guide slots 7,19. The intersecting primary and secondary guide edges 7a,19a block movement of the first and second support members 3,15 relative to the movement element 26 to prevent the support members 3,15 from pivoting relative to one another when the device 1 is in the normal, unactivated condition.

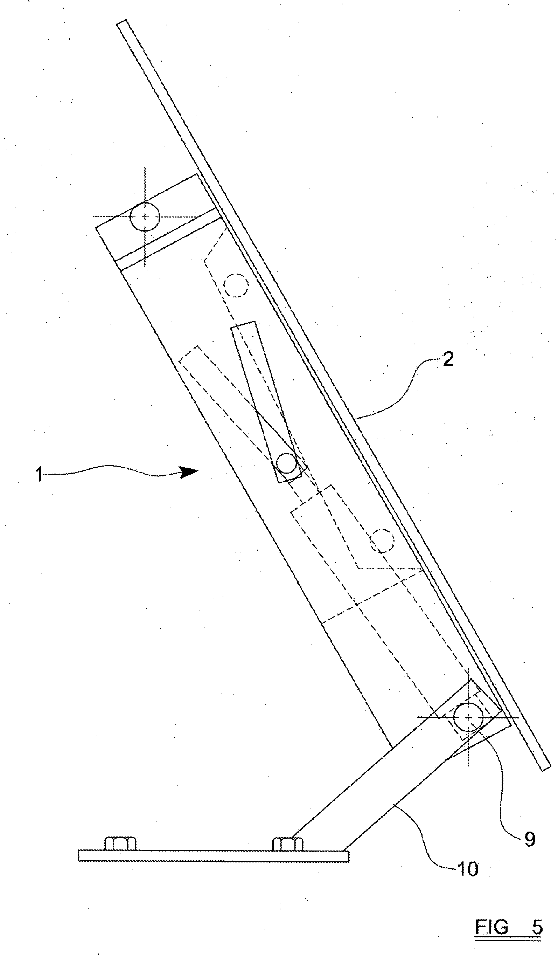

The device 1 is, however, still free to pivot about the pivot member 9, to allow the front of the hood to be raised to provide access to the engine, as shown in figure 5. The device 1 therefore allows the hood 2 to be opened manually from the front without activating of the device 1.

Upon activation of the device 1 in a crash situation, the drive means 24 moves the piston 25. The piston 25 drives the movement element 26 in the drive direction D against the primary guide edge 7a of the guide slot 7 in the first support member 3 and against the secondary guide edge 19a of the guide slot 19 in the second support member 15. The movement element 26 slides along the guide slots 7,19 as it is driven by the drive means 24. The movement element 26 exerts a force slidably along at least part of the length of the primary and secondary guide edges 7a,19a when the movement element 26 is driven by the drive means 24.

As the movement element 26 slides along the guide slots 7,19, the movement element 26 causes the second support member 15 to pivot relative to the first support member 3 about the pivot shaft 23. The drive means 24 pivots about the pivot member 9 as the movement element 26 follows the path which is set by the primary and secondary guide edges 7a,19a of the guide slots 7,19.

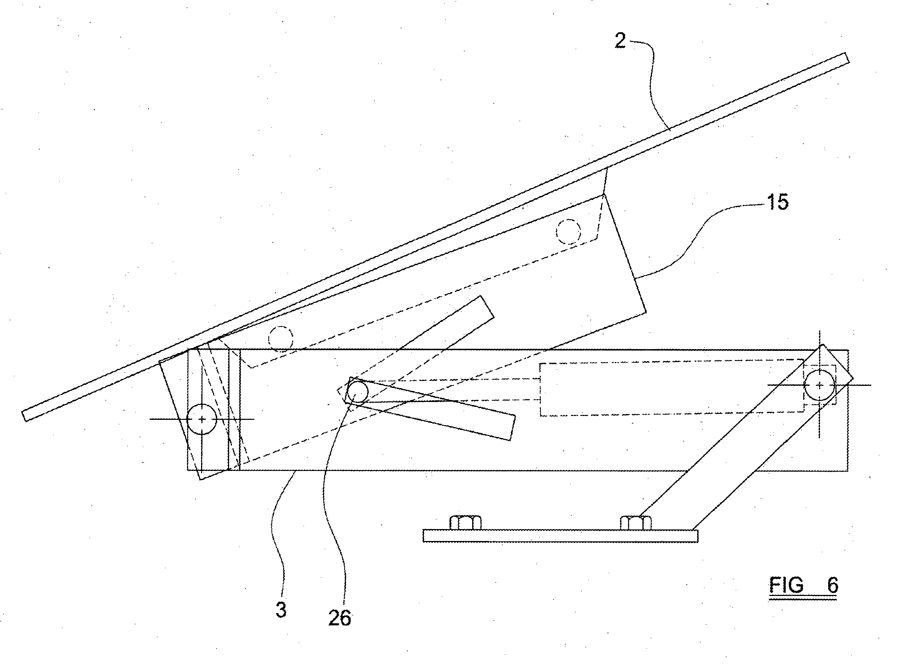

The movement element 26 slides along the guide slots 7,19 until the movement element 26 is blocked from moving further by the leftmost ends of the guide slots 7,19. The guide slots 7,19 preferably have the same travel length to avoid high friction and skewing in the drive means 24 as the drive means 24 drives the movement element 26 along the guide slots 7,19. When the movement element 26 reaches the leftmost ends of the guide slots 7,19, the second support member 15 is in an activated position, with the rear part of the hood 2 lifted relative to the vehicle by the device 1, as shown in figure 6.

When the movement element 26 is at the leftmost end of the guide slots 7,19 the movement element 26 is retained in position by the edges of the guide slots 7,19 and the piston 25 so that the rear part of the hood 2 remains in the lifted position. The hood 2 is thus locked in the lifted position to allow a pedestrian who lands on the hood during the crash situation to deform the hood 2 over a distance, thereby cushioning the impact with the pedestrian.

After activation of the device 1, the piston 25 can be pushed back into the cylinder of the drive means 24 so that the movement element 26 slides towards the rightmost end of the guide slots 7,19, thereby allowing the second support member 15 to pivot back to the normal, unactivated position as shown in figure 1.

In this preferred embodiment, the drive means 24 is driven by gas from a cylinder. After activation, the cylinder can be refilled with compressed gas to recharge the lifting device 1. In other embodiments, however, the drive means 24 is a reversible drive means which is configured to retract the piston 25 automatically to lower the rear part of the hood 1 to return the lifting device 1 to the normal, unactivated condition. It is particularly advantageous to provide a reversible drive means in embodiments which incorporate a sensor to sense when a crash situation might be about to occur, so that the drive means can return the hood to the normal position if the crash situation does not in fact occur.

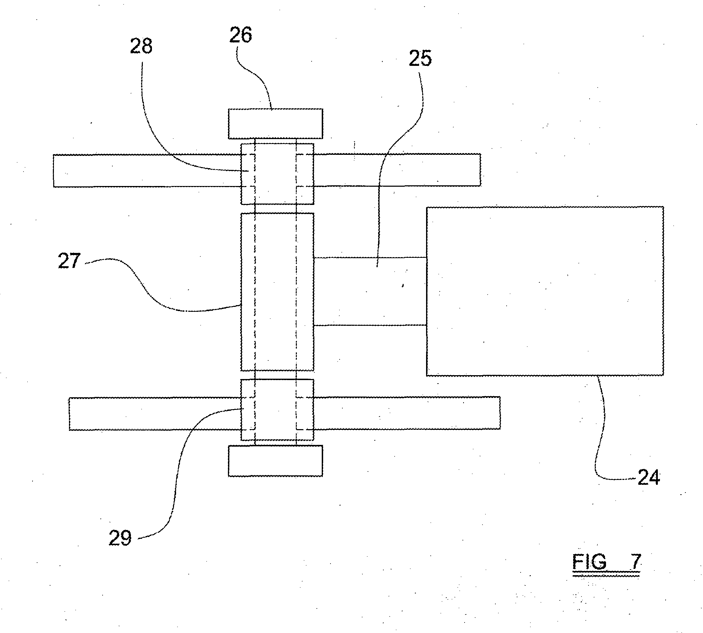

Referring now to figure 7 of the accompanying drawings, a further embodiment of the invention incorporates a central collar which is fixed to the end of the piston 25. The collar 27 receives the movement element 26 rotatably so that the movement element 26 can rotate within the collar 27. Hollow cylindrical bushings 28,29 are provided on either side of the collar 27 around the ends of the movement element 26. The bushings 28,29 are configured to rotate around the ends of the movement element 26. The bushings 28,29 are dimensioned to fit slidably in the respective guide slots 7,19. The bushings 28,29 rotate as the movement element 26 moves along the guide slots 7,19 to facilitate movement of the movement element 26 and to minimise friction against the edges of the guide slots 7,19. In other embodiments, there is only one bushing which is mounted rotatably to the movement element 26. In further embodiments, there are more than two bushings mounted to the movement element 26.

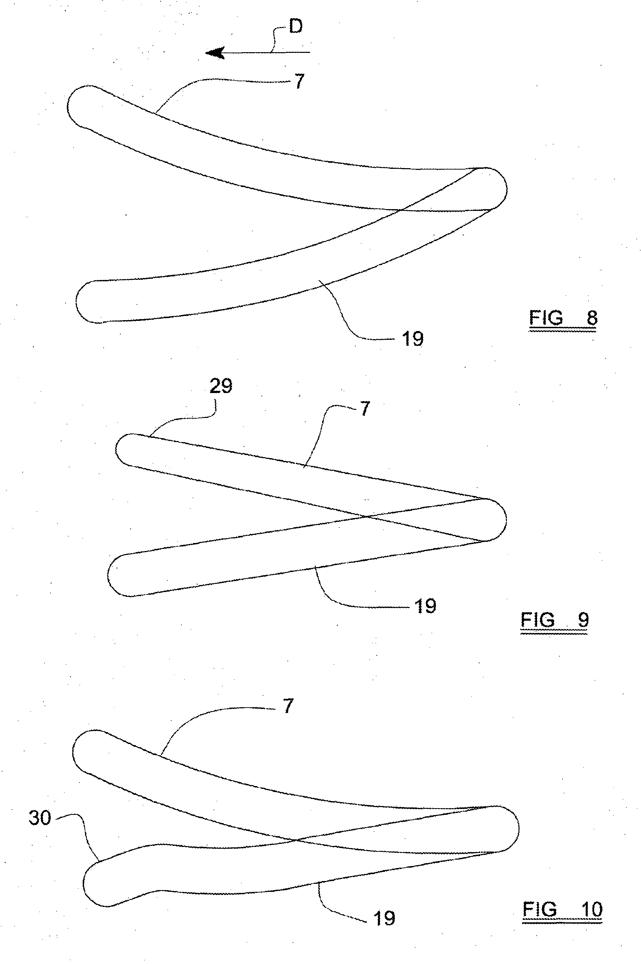

Referring now to figure 8 of the accompanying drawings, a yet further embodiment of the invention is identical to the preferred embodiment described above, except that this yet further embodiment incorporates curved guide slots 7,19. The guide slot 7 in the first support member 3 curves in an arc upwardly in the drive direction D. The guide slot 19 in the second support member 15 curves in the same arcuate shape as the guide slot 7 in the first support member 3 in the drive direction D. The curvature of the guide slots 7,19 causes the device 1 to lift the rear part of the hood 2 slowly at first and then more quickly as the device 1 moves towards the activated condition.

In another embodiment of the invention, the curved guide slots 7,19 shown in figure 8 are both inverted so that they curve arcuately downwardly in the drive direction D. This downward curve of the guide slots 7,19 causes the device 1 to lift the rear part of the hood 2 quickly at first and then more gradually as the device 1 moves towards the activated condition.

In a further embodiment of the invention, the guide slots 7,19 curve in opposite directions, that is to say, with one of the guide slots 7,19 curving upwardly and the other guide slots 7,19 curving downwardly in the drive direction D.

In yet further embodiments, one of the guide slots 7,19 may be straight, with the other guide slots 7,19 being curved upwardly or downwardly in the drive direction D. It is to be appreciated that the way in which the lifting device 1 lifts the rear part of the hood 2 can be selected by choosing different guide slot configurations as required.

Referring to figure 9 of the accompanying drawings, the width of the guide slot 7 in the first support member 3 tapers inwardly in the drive direction D to a narrow end 29. The edges of the guide slot 7 resist movement of the movement element 26 along the tapered guide slot 7 which slows the movement of the movement element 26, and hence slows lifting of the rear part of the hood 2, as the lifting device 1 approaches the activated condition. In other embodiments, the guide slot 19 in the second support member 15 is tapered instead of or in addition to the guide slot 7 in the first support member 3.

Referring to figure 10 of the accompanying drawings, the guide slots 7,19 are curved in a similar fashion to the embodiment shown in figure 8. However, in this further embodiment, the guide slot 19 in the second support member 15 is provided with a substantially S-shaped groove 30 at the rightmost end of the guide slot 19 which is furthest from the drive means 24. As the movement element 26 moves towards the front end of the guide slot 19, the movement element 26 slips downwardly into the groove 30. The movement element 26 is received and retained in the groove 30 to lock the lifting device 1 in the activated position, with the rear part of the hood 2 being locked in the lifted position. This may be desirable to lock the rear part of the hood 2 in the lifted position to prevent the hood 2 from lowering when a pedestrian lands on the hood 2.

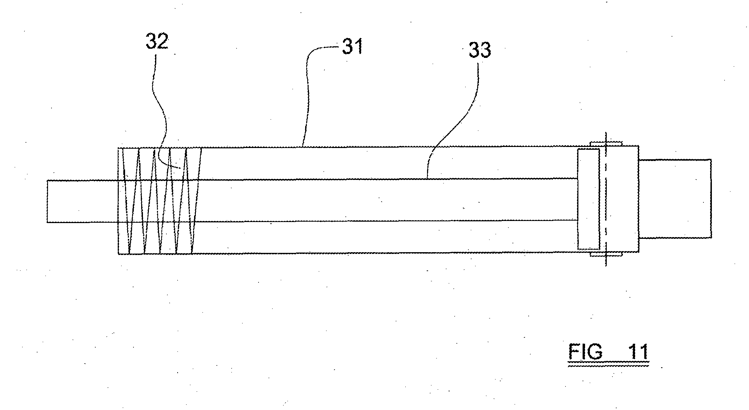

Referring to figure 11 of the accompanying drawings, a modified drive means 31 is used in embodiments of the invention which have a groove 30 in one of the guide slots 7,19, as shown in figure 10. The modified drive means 31 incorporates a resilient element, such as an internal spring 32 which is compressed by the piston 33 when the piston 33 is fully extended from the drive means 31. The spring 32 biases the piston 33 towards the retracted position so that the piston 33 pulls the movement element 26 out from the groove 30 of the guide slot if the rear part of the hood 2 is lifted. The modified drive means 31 with the spring 32 thus makes it easier to reset the device 1 after activation.

The safety device 1 of embodiments of the invention is a hinge which incorporates an integrated drive means 24. The safety device 1 does not require a drive means to be mounted elsewhere in the vehicle to lift the rear part of the hood 2. Consequently, the device 1 does not require special mountings to be provided on a vehicle to mount a separate drive means. The device 1 can be mounted to standard mounting components provided on the underside of the hood and to a standard mounting brackets provided on a vehicle. The drive means 24 can be mounted to the safety device 1 after the other hinge parts of the safety device 1 have been mounted to the hood 2 and the vehicle and been painted.

The drive means 24 is mounted between the first support member 3 and the second support member 15 and the movement element 26 exerts forces on the support members 3,15 equally in the same general direction. The drive forces of the drive means 24 are therefore equally distributed between the support member 3,15.

In a preferred embodiment the drive means 24 comprises a pyrotechnical gas generator.

In some embodiments of the invention, the drive means 24 is itself filled with compressed gas. For instance, the cylinder of the drive means 24 can be pressurised by gas at a pressure used commonly in paint ball guns. It is therefore cheap to recharge the drive means 24 after activation by simply re-pressurising the chamber with commonly available source of compressed gas.

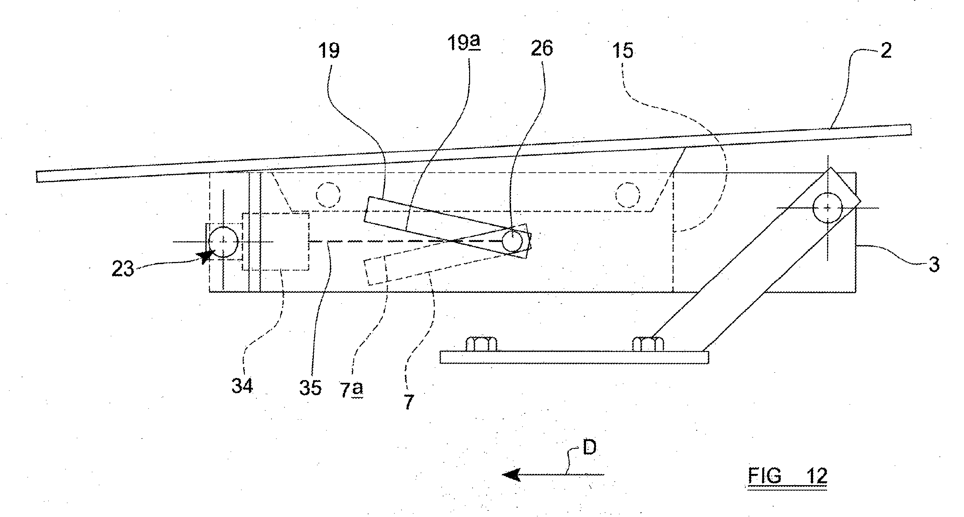

Referring now to figure 12 of the accompanying drawings, a further embodiment of the invention is similar to the preferred embodiment described above. The guide slots 7,19 in the support members 3,15 of this further embodiment are, however, inverted and the arrangement incorporates a modified drive means 34 which is mounted pivotally to the pivot shaft 23.

In this further embodiment, the modified drive means 34 is an electric motor which is configured to wind in a cable 35 which is connected to the movement element 26. The modified drive means 34 is a retractable drive means which, when activated, pulls the movement element 26 towards the pivot shaft 23 in a drive direction D. As the movement element 26 is pulled by the modified drive means 34, the movement element 26 is pulled against the primary guide edge 19a, which is the lower elongate edge of the guide slot 19, as shown in figure 12. The movement element 26 is also pulled slidably against the secondary guide edge 7a of the guide slot 7 in the first support member 3.

The force which the movement element 26 exerts slidably along the guide edge 19a causes the first and second support members 3,15 to pivot relative to one another about the pivot shaft 23 from an initial position to an activated position.

In other embodiments, the modified guide means 34 is replaced with a piston and cylinder arrangement in which the piston is extended when the device is in the normal, unactivated, condition. When the device is activated, the piston is retracted to pull the movement element 26 in the drive direction D.

In yet further embodiments, the modified drive means 34 is not mounted to the first or second support members 3,15, but is instead provided elsewhere on the vehicle, such as at another position on the underside of the hood 2. In these embodiments, the modified drive means can be configured to pull a flexible element or cable which can be guided to an appropriate position to drive the movement element 26. The modified drive means can therefore be positioned away from the hinge of the hood 2.

An advantage of embodiments of the invention is that only the drive means 24 needs to be re-charged or replaced after the safety device 1 has been activated. Embodiments of the invention do not incorporate a shear pin which shears during activation and which must be replaced after activation.

The same drive means 24 can be used in different embodiments of the invention which are each adapted to be mounted to different standard vehicle hood mounts.

Whilst in the embodiments described above, the guide edges 7a,19a are defined by edges of guide slots 7,19, in other embodiments of the invention, one or both of the guide edges is defined by a different part of the support members 3,15. For instance, in one embodiment, the primary guide edge is defined by the lower edge of the planar section of the secondary support member 15. In another embodiment, the primary or secondary guide edges are defined by the edge of an elongate wall which protrudes from one side of the support members 3,15.

The safety device 1 of the preferred embodiment of the invention is a hinged lifting device which has an integrated drive means 24. The safety device 1 of the preferred embodiment is therefore different from prior art lifting arrangements in which a hinged device and a drive means are provided separately from one another. In other embodiments, however, it is to be appreciated that the drive means may be separate to the rest of the device 1.

When used in this specification and claims, the terms "comprises" and "comprising" and variations thereof mean that the specified features, steps or integers are included. The terms are not to be interpreted to exclude the presence of other features, steps or components.

## Claims

1. A hood-lifting safety device for use in a vehicle, the device comprising:
a first elongate support member (3) which is mounted, in use, to part of a vehicle,
a second elongate support member (15) which incorporates a mounting edge (15a) which is mounted, in use, to the hood (2) of a vehicle, the first and second support members (3,15) being attached to each other pivotally, and
a movement element (26) which is configured to be driven in a drive direction (D), **characterised in that**:
the second support member (15) is provided with a primary elongate guide edge (19a) which extends at least partly along the second support member (15), the primary guide edge (19a) being inclined at an angle relative to the drive direction (D) with the primary guide edge (19a) sloping away from the mounting edge (15a) in the drive direction (D), wherein the first support member (3) incorporates a reference edge (3a) which is adjacent to and substantially parallel with the mounting edge (15a) of the second support member (15) when the second support member (15a) is in an initial position, and wherein the first support member (3) is provided with a secondary elongate guide edge (7a) which is inclined an angle relative to the drive direction (D) with the secondary guide edge (7) sloping towards the reference edge (3a) in the drive direction (D), the movement element (26) engaging the primary guide edge (19a) and the secondary guide edge (7a) and exerting a force slidably along at least part of the length of the primary guide edge (19a) and the secondary guide edge (7a) when the movement element (26) is driven in the drive direction (D) to pivot the second support member (15) relative to the first support member (3) from the initial position to an activated position.

2. A hood-lifting safety device according to claim 1, wherein the device further comprises a drive means (24,31,34) which is mounted to the first support member (3).

3. A hood-lifting safety device according to claim 2, wherein the first and second support members (3,15) are attached to each another pivotally at or near one end and the drive means (24) is mounted pivotally at or near the other end of the first support member (3) by a pivot member (9).

4. A hood-lifting safety device according to claim 3, wherein the device incorporates a mounting bracket (12) which is attached, in use, to part of a vehicle, the mounting bracket (12) being attached pivotally to the first support member (3) by the pivot member (9).

5. A hood-lifting safety device according to any one of the preceding claims, wherein the primary guide edge (19a) has a groove (30) at one end which is receives and retains the movement element (26) when the second support member (15) is in the activated position.

6. A hood-lifting safety device according to claim 5 as dependent on any one of claims 2 to 4, wherein the drive means (31) incorporates a resilient element (32) which biases the drive means (31) to move the movement element (26) in a direction which is opposite to the drive direction (D) when the movement element (26) is retained in the groove (30).

7. A hood-lifting safety device according to any one of the preceding claims, wherein the primary guide edge (19a) is substantially straight.

8. A hood-lifting safety device according to any one of claims 1-6, wherein the primary guide edge (19a) is curved.

9. A hood-lifting safety device according to any one of the preceding claims, wherein the primary guide edge (19a) is an edge of an elongate slot (19) which is provided in the second support member (15).

10. A hood-lifting safety device according to any one of the preceding claims, wherein the secondary guide edge (7a) is substantially straight.

11. A hood-lifting safety device according to any one of claims 1 to 9, wherein the secondary guide edge (7a) is curved.

12. A hood-lifting safety device according to any one of the preceding claims, wherein the secondary guide edge (7a) is an edge of an elongate guide slot (7) which is provided in the first support member (3).

13. A hood-lifting safety device according to claim 12, wherein the width of the guide slot (7) in the first support member (3) tapers inwardly along the length of the guide slot (7).

14. A hood-lifting safety device according to any one of the preceding claims, wherein the movement element (26) is provided with at least one bushing (28,29) which is rotatably mounted to the movement element (26).

## Patentansprüche

1. Sicherheitsvorrichtung zum Anheben einer Motorhaube zur Verwendung in einem Fahrzeug, wobei die Vorrichtung Folgendes umfasst:
ein erstes längliches Halteelement (3), das im Gebrauch an einem Teil eines Fahrzeugs montiert ist,
ein zweites längliches Halteelement (15), das eine Montagekante (15a) aufweist, die im Gebrauch an der Motorhaube (2) eines Fahrzeugs montiert ist, wobei das erste und zweite Halteelement (3, 15) schwenkbar aneinander befestigt sind, und
ein Bewegungselement (26), das so ausgelegt ist, dass es in eine Verschieberichtung (D) verschoben wird, **dadurch gekennzeichnet, dass**:
das zweite Halteelement (15) mit einer primären länglichen Führungskante (19a) versehen ist, die zumindest teilweise das zweite Halteelement (15) entlang verläuft, wobei die primäre Führungskante (19a) unter einem Winkel bezogen auf die Verschieberichtung (D) geneigt ist, wobei die primäre Führungskante (19a) in der Verschieberichtung (D) von der Montagekante (15a) weg geneigt ist, wobei das erste Halteelement (3) eine Bezugskante (3a) aufweist, die benachbart und im Wesentlichen parallel zu der Montagekante (15a) des zweiten Halteelements (15) verläuft, wenn sich das zweite Halteelement (15a) in einer Ausgangsposition befindet, und wobei das erste Halteelement (3) mit einer sekundären länglichen Führungskante (7a) versehen ist, die unter einem Winkel bezogen auf die Verschieberichtung (D) geneigt ist, wobei die sekundäre Führungskante (7) in der Verschieberichtung (D) auf die Bezugskante (3a) zu geneigt ist, wobei das Bewegungselement (26) an der primären Führungskante (19a) und der sekundären Führungskante (7a) eng anliegt und verschiebbar entlang von zumindest einem Teil der Länge der primären Führungskante (19a) und der sekundären Führungskante (7a) eine Kraft ausübt, wenn das Bewegungselement (26) in die Verschieberichtung (D) verschoben wird, damit das zweite Halteelement (15) bezogen auf das erste Halteelement (3) aus der Ausgangsposition in eine aktivierte Position geschwenkt wird.

2. Sicherheitsvorrichtung zum Anheben einer Motorhaube nach Anspruch 1, wobei die Vorrichtung ferner ein Verschiebemittel (24, 31, 34) umfasst, das an dem ersten Halteelement (3) montiert ist.

3. Sicherheitsvorrichtung zum Anheben einer Motorhaube nach Anspruch 2, wobei das erste und zweite Halteelement (3, 15) an oder nahe einem Ende schwenkbar aneinander befestigt sind und das Verschiebemittel (24) an oder nahe dem anderen Ende des ersten Halteelements (3) über ein Schwenkelement (9) schwenkbar montiert ist.

4. Sicherheitsvorrichtung zum Anheben einer Motorhaube nach Anspruch 3, wobei die Vorrichtung eine Montagehalterung (12) aufweist, die im Gebrauch an einem Teil eines Fahrzeugs befestigt ist, wobei die Montagehalterung (12) über das Schwenkelement (9) schwenkbar an dem ersten Halteelement (3) befestigt ist.

5. Sicherheitsvorrichtung zum Anheben einer Motorhaube nach einem der vorhergehenden Ansprüche, wobei die primäre Führungskante (19a) eine Aussparung (30) an einem Ende aufweist, die das Bewegungselement (26) aufnimmt und hält, wenn sich das zweite Halteelement (15) in der aktivierten Position befindet.

6. Sicherheitsvorrichtung zum Anheben einer Motorhaube nach Anspruch 5, wenn er von einem der Ansprüche 2 bis 4 abhängt, wobei das Verschiebemittel (31) ein federndes Element (32) aufweist, das das Verschiebemittel (31) so vorspannt, dass es das Bewegungselement (26) in eine Richtung bewegt, die der Verschieberichtung (D) entgegengesetzt ist, wenn das Bewegungselement (26) in der Aussparung (30) gehalten ist.

7. Sicherheitsvorrichtung zum Anheben einer Motorhaube nach einem der vorhergehenden Ansprüche, wobei die primäre Führungskante (19a) im Wesentlichen gerade ist.

8. Sicherheitsvorrichtung zum Anheben einer Motorhaube nach einem der Ansprüche 1 bis 6, wobei die primäre Führungskante (19a) gebogen ist.

9. Sicherheitsvorrichtung zum Anheben einer Motorhaube nach einem der vorhergehenden Ansprüche, wobei die primäre Führungskante (19a) eine Kante eines länglichen Schlitzes (19) ist, der in dem zweiten Halteelement (15) vorgesehen ist.

10. Sicherheitsvorrichtung zum Anheben einer Motorhaube nach einem der vorhergehenden Ansprüche, wobei die sekundäre Führungskante (7a) im Wesentlichen gerade ist.

11. Sicherheitsvorrichtung zum Anheben einer Motorhaube nach einem der Ansprüche 1 bis 9, wobei die sekundäre Führungskante (7a) gebogen ist.

12. Sicherheitsvorrichtung zum Anheben einer Motorhaube nach einem der vorhergehenden Ansprüche, wobei die sekundäre Führungskante (7a) eine Kante eines länglichen Führungsschlitzes (7) ist, der in dem ersten Halteelement (3) vorgesehen ist.

13. Sicherheitsvorrichtung zum Anheben einer Motorhaube nach Anspruch 12, wobei die Breite des Führungsschlitzes (7) in dem ersten Halteelement (3) entlang der Länge des Führungsschlitzes (7) nach innen spitz zuläuft.

14. Sicherheitsvorrichtung zum Anheben einer Motorhaube nach einem der vorhergehenden Ansprüche, wobei das Bewegungselement (26) mit mindestens einer Buchse (28, 29) versehen ist, die drehbar an dem Bewegungselement (26) montiert ist.

## Revendications

1. Dispositif de sécurité pour lever un capot destiné à être utilisé dans un véhicule, le dispositif comprenant :
un premier élément de support (3) allongé qui est monté, lors de l'utilisation, sur une partie d'un véhicule,
un second élément de support (15) allongé qui inclut un bord de montage (15a) qui est monté, lors de l'utilisation, sur le capot (2) d'un véhicule, les premier et second éléments de support (3, 15) étant fixés l'un à l'autre de manière pivotante, et
un élément mobile (26) qui est configuré pour être entraîné dans une direction d'entraînement (D), **caractérisé en ce que** :
le second élément de support (15) est doté d'un bord de guidage principal (19a) allongé, qui s'étend au moins partiellement le long du second élément de support (15), le bord de guidage principal (19a) étant incliné selon un angle par rapport à la direction d'entraînement (D) avec le bord de guidage principal (19a) s'éloignant en pente du bord de montage (15a) dans la direction d'entraînement (D), le premier élément de support (3) incluant un bord de référence (3a) qui est adjacent et essentiellement parallèle au bord de montage (15a) du second élément de support (15) quand le second élément de support (15a) est dans une position initiale, et dans lequel le premier élément de support (3) est doté d'un bord de guidage secondaire (7a) allongé, qui est incliné selon un angle par rapport à la direction d'entraînement (D) avec le bord de guidage secondaire (7) s'approchant en pente du bord de référence (3a) dans la direction d'entraînement (D), l'élément mobile (26) étant en contact avec le bord de guidage principal (19a) et le bord de guidage secondaire (7a) et exerçant une force de manière coulissante le long d'au moins une partie de la longueur du bord de guidage principal (19a) et du bord de guidage secondaire (7a) quand l'élément mobile (26) est entraîné dans la direction d'entraînement (D) pour faire pivoter le second élément de support (15) par rapport au premier élément de support (3) de la position initiale à une position activée.

2. Dispositif de sécurité pour lever un capot selon la revendication 1, dans lequel le dispositif comprend en outre un moyen d'entraînement (24, 31, 34) qui est monté sur le premier élément de support (3).

3. Dispositif de sécurité pour lever un capot selon la revendication 2, dans lequel les premier et second éléments de support (3, 15) sont fixés l'un à l'autre de manière pivotante sur ou près d'une extrémité et le moyen d'entraînement (24) est monté de manière pivotante sur ou près de l'autre extrémité du premier élément de support (3) par le biais d'un élément de pivotement (9).

4. Dispositif de sécurité pour lever un capot selon la revendication 3, dans lequel le dispositif inclut un support de montage (12) qui est fixé, lors de l'utilisation, à une partie d'un véhicule, le support de montage (12) étant fixé de manière pivotante au premier élément de support (3) par le biais de l'élément de pivotement (9).

5. Dispositif de sécurité pour lever un capot selon l'une quelconque des revendications précédentes, dans lequel le bord de guidage principal (19a) comporte une rainure (30) sur une extrémité, qui reçoit et retient l'élément mobile (26) quand le second élément de support (15) est dans la position activée.

6. Dispositif de sécurité pour lever un capot selon la revendication 5 quand elle dépend de l'une quelconque des revendications 2 à 4, dans lequel le moyen d'entraînement (31) inclut un élément résilient (32) qui contraint le moyen d'entraînement (31) à déplacer l'élément mobile (26) dans une direction qui est opposée à la direction d'entraînement (D) quand l'élément mobile (26) est retenu dans la rainure (30).

7. Dispositif de sécurité pour lever un capot selon l'une quelconque des revendications précédentes, dans lequel le bord de guidage principal (19a) est essentiellement droit.

8. Dispositif de sécurité pour lever un capot selon l'une quelconque des revendications 1 à 6, dans lequel le bord de guidage principal (19a) est incurvé.

9. Dispositif de sécurité pour lever un capot selon l'une quelconque des revendications précédentes, dans lequel le bord de guidage principal (19a) est un bord d'une fente (19) allongée qui se trouve dans le second élément de support (15).

10. Dispositif de sécurité pour lever un capot selon l'une quelconque des revendications précédentes, dans lequel le bord de guidage secondaire (7a) est essentiellement droit.

11. Dispositif de sécurité pour lever un capot selon l'une quelconque des revendications 1 à 9, dans lequel le bord de guidage secondaire (7a) est incurvé.

12. Dispositif de sécurité pour lever un capot selon l'une quelconque des revendications précédentes, dans lequel le bord de guidage secondaire (7a) est un bord d'une fente de guidage (7) allongée qui se trouve dans le premier élément de support (3).

13. Dispositif de sécurité pour lever un capot selon la revendication 12, dans lequel la largeur de la fente de guidage (7) dans le premier élément de support (3) s'amincit vers l'intérieur le long de la longueur de la fente de guidage (7).

14. Dispositif de sécurité pour lever un capot selon l'une quelconque des revendications précédentes, dans lequel l'élément mobile (26) est doté d'au moins une bague (28, 29) qui est montée rotative sur l'élément mobile (26).
